(19) Europäisches Patentamt
European Patent Office
Office européen des brevets

(11) **EP 2 885 608 B1**

(12) **EUROPÄISCHE PATENTSCHRIFT**

(45) Veröffentlichungstag und Bekanntmachung des Hinweises auf die Patenterteilung:
**31.01.2018 Patentblatt 2018/05**

(51) Int Cl.:
***G01C 15/00*** *(2006.01)*  ***G01B 11/00*** *(2006.01)*
***G01S 17/87*** *(2006.01)*

(21) Anmeldenummer: **13748074.5**

(22) Anmeldetag: **13.08.2013**

(86) Internationale Anmeldenummer:
**PCT/EP2013/066938**

(87) Internationale Veröffentlichungsnummer:
**WO 2014/027002 (20.02.2014 Gazette 2014/08)**

(54) **HANDHALTBARES ENTFERNUNGSMESSGERÄT MIT WINKELBESTIMMUNGSEINHEIT**

HAND-HELD DISTANCE MEASURING DEVICE WITH ANGLE CALCULATION UNIT

APPAREIL DE MESURE DE DISTANCE POUVANT ÊTRE TENU À LA MAIN AVEC UNITÉ DE DÉTERMINATION D'ANGLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2012 EP 12180751**

(43) Veröffentlichungstag der Anmeldung:
**24.06.2015 Patentblatt 2015/26**

(73) Patentinhaber: **Leica Geosystems AG**
**9435 Heerbrugg (CH)**

(72) Erfinder: **BÖSCH, Thomas**
**A-6890 Lustenau (AT)**

(74) Vertreter: **Kaminski Harmann**
**Patentanwälte AG**
**Landstrasse 124**
**9490 Vaduz (LI)**

(56) Entgegenhaltungen:
**DE-A1-102009 047 387    US-A1- 2011 288 818**

**Beschreibung**

Die vorliegende Erfindung betrifft ein handhaltbares Entfernungsmessgerät mit einer Distanzmesseinheit und einer Winkelbestimmungseinheit zur Bestimmung von Raumwinkeln in Relation zu einem Referenzkoordinatensystem, mittels welchem dreidimensionale Koordinaten von Raumpunkten bestimmt und angezeigt werden können.

Ein erfindungsgemäßes handhaltbares Entfernungsmessgerät beinhaltet zu diesem Zweck eine ausklappbare Referenzierungsstütze, mit welcher Winkel und Ausrichtungsänderungen des Entfernungsmessgerätes relativ zu einem zum Referenzkoordinatensystem feststehenden externen Referenzobjekt bestimmt werden können. Die räumliche Ausrichtung des Entfernungsmessgerätes gegenüber dem Referenzobjekt ist insbesondere über Winkelmesser erfassbar. Zusätzlich können Neigungssensoren zur Bestimmung der Ausrichtung bezüglich des Schwerefeld-Vektors der Erde vorgesehen sein.

In vielen Anwendungen werden Verfahren und Systeme zur Entfernungsmessung verwendet. Beispiele hierfür sind ausgesprochen präzise Vermessungen in geodätischen Applikationen, aber auch Messaufgaben im Bereich der Bauinstallation oder für industrielle Prozesssteuerungen.

Für diese Aufgaben werden stationäre, bewegbare oder auch handhaltbare Entfernungsmessgeräte eingesetzt, welche eine optische Entfernungsmessung zu einem ausgewählten Messpunkt ausführen. Zumeist wird hierbei ein Laserstrahl emittiert und nach Reflektion am Ziel wieder empfangen und ausgewertet. Zur Bestimmung der Entfernung stehen dabei verschiedene Messprinzipien zur Verfügung, wie z.B. Phasen- oder Laufzeitmessung.

Insbesondere im Bereich der Bauinstallation oder Bauabnahme werden tragbare und in der Hand zu haltende Geräte verwendet, welche bezüglich einer zu vermessenden Struktur angelegt werden und dann eine Entfernungsmessung zu einer Oberfläche durchführen. Ein für solche Anwendungen geeignetes und typisches handhaltbares Entfernungsmessgerät wird beispielsweise in der EP 0 738 899 und der EP 0 701 702 beschrieben.

Da für die meisten Anwendungen ein auf der anzumessenden Oberfläche sichtbarer Messpunkt vorteilhaft ist, werden zumeist rote Laser als Strahlungsquellen für die Entfernungsmessung verwendet. Mit Entfernungsmessern des Stands der Technik sind so bei grosser Handhabungsfreundlichkeit Genauigkeiten bis in den Millimeterbereich erzielbar. Mit derzeit erhältlichen handhaltbaren Entfernungsmessgeräten können Messungen von einem Punkt zu einem anderen Punkt durchgeführt werden, zu dem eine Sichtverbindung besteht. Wenn das Ziel verdeckt ist, können mittels eines Neigungssensors auch Horizontalmasse ermittelt werden.

Eine Möglichkeit zur Bestimmung einer Entfernung zwischen zwei Punkten, die auch anwendbar ist, wenn zwischen den Punkten keine Sichtverbindung besteht, ist die Berechnung mittels Trigonometrie. Dies ist bereits aus bodengestützten Vermessungsgeräten, wie Theodoliten oder Totalstationen, hinlänglich bekannt.

Zur trigonometrischen Ermittlung einer Entfernung $a$ zwischen zwei Raumpunkten B und C genügt es, die Entfernung zu diesen zwei Punkten von einem dritten Punkt A zu kennen, und den Winkel $\alpha$ an Punkt A zwischen den Seiten b und c in Richtung der Punkte B und C. Dann kann mittels des Kosinussatzes die Länge von $a$ errechnet werden:

$$a = \sqrt{b^2 + c^2 - 2 \cdot b \cdot c \cdot \cos\alpha}$$

Mit einem herkömmlichen handhaltbaren Entfernungsmessgerät des Standes der Technik ist es zwar möglich, die Distanzen b und c zu den Raumpunkten B und C exakt zu messen, es fehlt aber in aller Regel an einer Funktion zur genauen und zuverlässigen Bestimmung des Winkels $\alpha$. Heute verfügbare Beschleunigungssensoren können für Zwecke der Entfernungsberechnung keinen ausreichend verlässlichen Wert für $\alpha$ liefern, und Kompasse sind insbesondere in Innenräumen von Gebäuden störungsanfällig; allenfalls Winkel in der Vertikalen können mittels Neigungssensoren mit ausreichender Genauigkeit und Verlässlichkeit ermittelt werden.

US 2011/0288818 A1 zeigt ein handhaltbares Entfernungsmessgerät, das auf einem Dreibein montierbar ist, wobei ein Winkel zwischen dem Entfernungsmessgerät und dem Dreibein ermittelbar ist.

Im Stand der Technik sind verschiedene Lösungen mit handhaltbaren Entfernungsmessgeräten mit Laserentfernungsmessern beschrieben, mittels derer zwei Punkte gleichzeitig angezielt werden können, wobei ein Winkel zwischen den Emissionsrichtungen der beiden Laser bestimmt werden kann.

In den beiden Dokumenten DE 10 2007 043 496 A1 und JP 2008 116 249 A wird jeweils ein handhaltbares Entfernungsmessgerät offenbart, das zwei gegenüber einander verdrehbare Laserentfernungsmesser umfasst, wobei der Winkel zwischen diesen bestimmbar ist.

In der DE 102 14 742 A1 ist hingegen eine Lösung mit zwei handhaltbaren Entfernungsmessgeräten beschrieben, welche schwenkbar miteinander verbunden werden, wobei die mechanische Verbindung zwischen den beiden Entfernungsmessgeräten Mittel zur Erfassung des Winkels aufweist.

Nachteilig bei allen diesen Lösungen ist insbesondere der erhöhte Materialaufwand, da jeweils zwei Lasermessmodule oder sogar zwei komplette Entfernungsmessgeräte zur Messung vonnöten sind.

Es ist daher eine Aufgabe der vorliegenden Erfindung, ein handhaltbares Entfernungsmessgerät bereitzustellen, das eine Bestimmung dreidimensionaler Koordinaten von mindestens zwei Raumpunkten innerhalb eines gemeinsamen Referenzkoordinatensystems erlaubt.

Eine weitere Aufgabe der Erfindung ist es, ein solches Entfernungsmessgerät mit einem geringeren konstruktiven Aufwand bereitzustellen, und insbesondere ohne das Erfordernis, das Entfernungsmessgerät in eine separate Winkelmessvorrichtung einzuspannen.

Es ist ausserdem eine besondere Aufgabe der Erfindung, ein solches handhaltbares Entfernungsmessgerät bereitzustellen, das mit nur einem einzigen Laserentfernungsmesser ausgestattet ist.

Mindestens eine dieser Aufgaben wird durch die Verwirklichung der kennzeichnenden Merkmale der unabhängigen Ansprüche gelöst. Vorteilhafte Ausgestaltungen der Erfindung finden sich dabei in den jeweils abhängigen Ansprüchen.

Das handhaltbare Entfernungsmessgerät der vorliegenden Erfindung ist in der Lage, Raumwinkel in einem Referenzkoordinatensystem sowohl in der Vertikalen als auch in der Horizontalen exakt zu erfassen, wodurch mittels einfacher trigonometrischer Berechnung die Ermittelung einer genauen Entfernung zwischen zwei nacheinander vermessenen Raumpunkten ermöglicht wird.

Dazu wird das Entfernungsmessgerät erfindungsgemäss über eine ausklappbare Referenzierungsstütze mit einem - zumindest während des Messvorganges - relativ zum Referenzkoordinatensystem feststehenden Referenzobjekt verbunden, um Änderungen der räumlichen Ausrichtung des Entfernungsmessgerätes in Relation zu dem Referenzobjekt zu erfassen. Dieses Referenzobjekt kann beispielsweise eine Tischplatte, ein Stativ oder auch ein Teil der Erdoberfläche, bzw. der Fussboden, sein.

Die Referenzierungsstütze ist mit einem Ende drehbar am Entfernungsmessgerät angebracht, vorzugsweise dreidimensional drehbar. Eine erfindungsgemässe Referenzierungsstütze kann beispielsweise aus Kunststoff oder Leichtmetall bestehen und in Form eines aus dem Entfernungsmessgerät nach unten ausklappbaren Stiftes vorliegen.

Dieser Stift kann am unteren Ende einen Standfuss aufweisen oder Mittel zum Befestigen an einem Standfuss, einem Sockel oder einem Stativ. Zum besseren Fixieren der Referenzierungsstütze auf einer glatten Oberfläche, wie zum Beispiel einer Tischplatte, kann die Unterseite optional gummiert oder mit einem Saugnapf ausgestattet sein.

Die Referenzierungsstütze kann alternativ auch teleskopartig ausziehbar gestaltet sein, oder in Aufnahmemittel des Entfernungsmessgerätes einschraub- oder einsteckbar.

Es ist auch möglich, dass die Referenzierungsstütze zum Messen nicht auf eine Oberfläche gestellt wird, sondern von einem Benutzer während der Messungen in der einen Hand gehalten wird, während die andere Hand das Entfernungsmessgerät ausrichtet, sofern die die Referenzierungsstütze haltende Hand zwischen den Messungen nicht bewegt wird. Dabei kann die Genauigkeit der Messungen allerdings durch natürliche Körperbewegungen wie Zittern oder das Heben und Senken des Brustkorbs durch Atmen beeinträchtigt werden.

Ein erfindungsgemässes handhaltbares Entfernungsmessgerät beinhaltet eine Funktion zur Erfassung eines Punktes im Raum, mindestens durch Messung der Distanz zwischen dem Entfernungsmessgerät und dem zu messenden Objekt mit einem sichtbaren Laserstrahl. Die Lage des dreidimensional zu erfassenden Punktes wird, beispielsweise durch Winkelsensoren und/oder Neigungssensoren, im Entfernungsmessgerät bestimmt.

Das erfindungsgemässe handhaltbare Entfernungsmessgerät enthält ein Distanzmessmodul zur Messung der Entfernung zu auf Oberflächen gelegenen Raumpunkten. Das Distanzmessmodul ist bevorzugt ein Laserdistanzmesser, der einen, insbesondere sichtbaren, Laserstrahl in Richtung eines zu vermessenden Punktes aussendet. Dazu weist das Distanzmessmodul eine, beispielsweise in das Gehäuse des Entfernungsmessgerätes eingelassene, Optik auf. Zum optischen Messen der Distanz zu einer Oberfläche werden von der Vorrichtung über die Optik modulierte optische Sendestrahlen in Form eines Strahlenbündels gegen die Oberfläche ausgesendet. Ein Teil der von der Oberfläche reflektierten Strahlen der Sendestrahlen wird von der Optik wieder eingesammelt und für ein Bestimmen von Distanzen elektronisch ausgewertet.

Das erfindungsgemässe handhaltbare Entfernungsmessgerät enthält ausserdem bevorzugt einen Neigungssensor zur Erfassung mindestens einer Längsneigung des Gerätes. Die Bestimmung der Lage des handhaltbaren Entfernungsmessgeräts im Raum kann in Bezug auf das Referenzkoordinatensystem mittels Neigungssensor vollautomatisch ermittelt werden. Alle Lagefehler des handhaltbaren Entfernungsmessgerätes können dadurch vollautomatisch kompensiert werden.

Durch die Integration zusätzlicher Komponenten zum Messen von Winkeln (Winkelbestimmungseinheit) ist das erfindungsgemässe Entfernungsmessgerät in der Lage, ausser Distanzen auch horizontale und vertikale Raumwinkel, eine Querneigung des Laserdistanzmessers bzw. der Horizontalachse des Entfernungsmessgerätes, eine Längsneigung des Laserdistanzmessers sowie eine Längsneigung der Horizontalachse zu messen. Mittels dieser gemessenen Werte können von einer Auswerteeinheit korrigierte dreidimensionale Koordinaten ermittelt werden, die unter anderem zur Berechnung von Horizontal- und Schrägdistanzen zwischen Raumpunkten genutzt werden können.

Diese zusätzlichen, zur Winkelbestimmung geeigneten Komponenten der Winkelbestimmungseinheit umfassen erfindungsgemäss entweder einen Neigungssensor und einen Winkelencoder, der insbesondere dazu ausgebildet ist, horizontale Winkel zu erfassen, oder zwei Winkelencoder, davon einen vertikale Winkel erfassenden und einen horizontale Winkel erfassenden Winkelencoder. Optional können zusätzlich ein Zwei-Achsen-Neigungssensor auf der Horizontalachse, ein Kompass und/oder ein Gyroskop enthalten sein.

Eine erste Ausrichtung des Systems kann optional anhand eines Kompasses oder eines GPS-Sensors erfolgen. Zum erfindungsgemässen Messen von Winkeln sind sowohl inkrementell als auch absolut arbeitende Winkelencoder geeignet, also Inkrementalgeber oder Absolutwertgeber.

In einer bevorzugten Ausführungsform beinhaltet das erfindungsgemässe handhaltbare Entfernungsmessgerät mindestens einen Winkelencoder. Der oder die Winkelencoder sind in der Winkelbestimmungseinheit in einem integrierten mechanischen System angeordnet.

Insbesondere ist die Winkelbestimmungseinheit derart angeordnet, dass an der Referenzierungsstütze, bzw. vorzugsweise im Innern des Entfernungsmessgerät an einer Befestigung für die Referenzierungsstütze mindestens ein Winkelencoder vorgesehen ist, der eine relative Ausrichtung des Gehäuses des Entfernungsmessgerätes in Bezug auf die Referenzierungsstütze und/oder einen Raumwinkel zwischen zwei Ausrichtungen des Entfernungsmessgerätes erfassen kann, mindestens in der Horizontalebene, vorzugsweise auch vertikal. Eine vertikale Ausrichtung kann alternativ auch durch einen Neigungssensor ermittelt werden. Dieser Neigungssensor kann auf der horizontalen Rotationsachse angebracht werden, um absolute Höhenreferenz in jeder Lage des Entfernungsmessgeräts zu bestimmen. Das Entfernungsmessgerät kann durch den integrierten Neigungssensor Höhen und Koordinaten absolut anzeigen.

Vorzugsweise kann die Referenzierungsstütze des Entfernungsmessgerätes über Sensoren zum Erfassen und Kompensieren von Messfehlern verfügen. Insbesondere in dem Falle, dass die Referenzierungsstütze vom Benutzer mit der Hand auf einen Referenzpunkt des Referenzobjekts gehalten wird, kann ein Wackeln der Referenzierungsstütze oder des gesamten Entfernungsmessgerätes auftreten. Ein Wackeln während eines Messvorganges oder zwischen zwei oder mehr Messvorgängen kann zu Messfehlern führen. Darum kann das Entfernungsmessgerät bevorzugt über zusätzliche Neigungssensoren in der Referenzierungsstütze oder an der Verbindung mit dem Gehäuse, beispielsweise auf der Winkelbestimmungseinheit, verfügen, die eine Bestimmung der räumlichen Ausrichtung der Referenzierungsstütze ermöglicht. Die Ausrichtung bzw. Ausrichtungsänderung der Stütze kann dann zur dynamischen Bestimmung der Lage des Entfernungsmessgerätes relativ zum Referenzpunkt verwendet und bei der Berechnung von Raumkoordinaten berücksichtigt werden.

Das erfindungsgemässe handhaltbare Entfernungsmessgerät kann Entfernungen zwischen zwei Punkten messen, ohne dass ein Referenzpunkt direkt zugänglich sein muss. Das Entfernungsmessgerät kann so das Spannmass zwischen zwei beliebigen mit dem Laserpunkt anzielbaren Punkten darstellen.

Das erfindungsgemässe handhaltbare Entfernungsmessgerät kann vorgegebene Koordinaten relativ zum ersten Messpunkt abstecken und dem Benutzer signalisieren. Ebenso kann von jedem beliebigen Punkt die Lotposition angezeigt werden.

Flächen von im Raum liegenden geometrischen Formen, die durch mindestens drei Messpunkte definiert werden, können automatisch berechnet werden. In ein aufgenommenes Mess-Image können automatisch geometrische Formen eingepasst werden, und deren Abmasse ermittelt werden. Mit dem aufgenommen Mess-Image können die Messpunkte an die gewünschte Position geschoben werden. Die Messkoordinaten werden dabei automatisch extrapoliert.

In einer weiteren Ausführungsform weist das erfindungsgemässe Entfernungsmessgerät eine Anzielhilfe, beispielsweise in Form eines Griffes, oder Mittel zur Aufnahme einer solchen Anzielhilfe auf. Eine solche Anzielhilfe, die beispielsweise am dem Laserentfernungsmesser gegenüberliegenden Ende des Entfernungsmessgerätes ausgeklappt oder ausgezogen bzw. angeschraubt oder anderweitig angebracht werden kann, erleichtert das genaue Anzielen eines Messpunktes.

In einer alternativen Ausführungsform ist das erfindungsgemässe Entfernungsmessgerät als ein Aufsetzmodul für einen handhaltbaren Kleincomputer, beispielsweise einen Tablett-Computer oder ein Smartphone, ausgestaltet. Dabei kann im Aufsetzmodul vorzugsweise auf Display, Eingabemittel und Neigungssensoren verzichtet werden, da diese in der Regel von heutigen Tablett-Computern und Smartphones bereitgestellt werden. Ebenso können digital vorliegende Entfernungswerte von einer Auswertekomponente des angeschlossenen Gerätes gespeichert und weiterverarbeitet werden. Über eine drahtlose Verbindung, beispielsweise mittels Bluetooth oder WLAN, bzw. über eine standardisierte Datenschnittstelle, beispielsweise ausgestaltet als USB-Schnittstelle, können Daten zwischen dem als Aufsetzmodul ausgestaltetem Entfernungsmessgerät und dem Kleincomputer ausgetauscht werden. Ein solches Aufsetzmodul kann entweder zur Aufnahme eines Kleincomputers mit genau definierten Ausmassen ausgestaltet sein, zum Beispiel eines bestimmten Typs eines Smartphones, oder für Geräte verschiedener Grössen und/oder Typen. Die Bedienung des Entfernungsmessgerätes und die Darstellung der Ergebnisse erfolgt über das an das Aufsetzmodul angeschlossene Gerät. Eine Software zur Ausführung der Entfernungsmessung mittels dieser Ausführungsform kann vorzugsweise von dem Aufsetzmodul auf den Kleincomputer übertragbar sein oder aber anderweitig installierbar sein, beispielsweise durch kostenloses oder gebührenpflichtiges Herunterladen aus dem Internet.

Das Aufsetzmodul kann eine Kamera aufweisen, die Bilder in Richtung der Emissionsrichtung des Laserstrahls aufnimmt, die einem Benutzer über das Display des angeschlossenen Gerätes anzeigbar sind. Verfügt das anschliessbare Gerät über eine Kamera, die an der dem Aufsetzmodul zugewandten Seite angebracht ist, so kann das Aufsetzmodul vorteilhaft auch über Umlenkmittel, zum Beispiel einen Spiegel, verfügen, die das Kamerabild in Richtung der Emissionsachse des Laserstrahls umlenken.

Das erfindungsgemässe handhaltbare Entfernungsmessgerät und das erfindungsgemässe Messverfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:

Fig. 1    ein erfindungsgemässes handhaltbares Entfernungs-messgerät mit einem Laserdistanzmesser;

Fig. 2    ein erfindungsgemässes handhaltbares Entfernungsmessgerät und die drei Drehachsen des Referenzkoordinatensystems;

Fig. 3a    ein erfindungsgemässes handhaltbares Entfernungsmessgerät mit einer eingeklappten Referenzierungsstütze;

Fig. 3b    ein erfindungsgemässes handhaltbares Entfernungsmessgerät mit einer ausgeklappten Referenzierungsstütze;

Fig. 4a    eine Kombination eines erfindungsgemässen handhaltbaren Entfernungsmessgerätes mit einem Standfuss;

Fig. 4b    eine Kombination eines erfindungsgemässen handhaltbaren Entfernungsmessgerätes mit einem Stativ;

Fig. 4c    ein erfindungsgemässes handhaltbares Entfernungsmessgerät mit einer Anzielhilfe;

Fig. 5a    eine erste beispielhafte Ausführungsform eines erfindungsgemässen handhaltbaren Entfernungsmessgerätes in einer Längsschnittansicht;

Fig. 5b    eine zweite beispielhafte Ausführungsform eines erfindungsgemässen handhaltbaren Entfernungsmessgerätes in einer Längsschnittansicht;

Fig. 5c    eine alternative Ausführungsform eines handhaltbaren Entfernungsmessgerätes in einer Längsschnittansicht;

Fig. 5d    eine weitere alternative Ausführungsform eines handhaltbaren Entfernungsmessgerätes in einer Längsschnittansicht;

Fig. 5e    ein erfindungsgemässes handhaltbares Entfernungsmessgerät in einer Seitenansicht mit zwei - bezüglich eines zur Referenzierungsstütze relativen Vertikalwinkels - unterschiedlichen Ausrichtungen des Gehäuses.

Fig. 6a    eine beispielhafte Ausführungsform des erfindungsgemässen handhaltbaren Entfernungsmessgerätes beim Messen der Entfernung zu einem ersten Messpunkt;

Fig. 6b    eine beispielhafte Ausführungsform des erfindungsgemässen handhaltbaren Entfernungsmessgerätes beim Messen der Entfernung zu einem zweiten Messpunkt;

Fig. 7    ein Flussdiagramm zur Vermessung der Entfernung zwischen zwei entfernten Raumpunkten;

Fig. 8    ein Diagramm zur Vermessung der Entfernung zwischen zwei entfernten Raumpunkten;

Fig. 9a-e    verschiedene Anwendungsbeispiele für das erfindungsgemässe handhaltbare Entfernungsmessgerät; und

Fig. 10    eine Ausführung des erfindungsgemässen handhaltbaren Entfernungsmessgerätes als Aufsetzmodul für ein Smartphone in einer Längsschnittansicht.

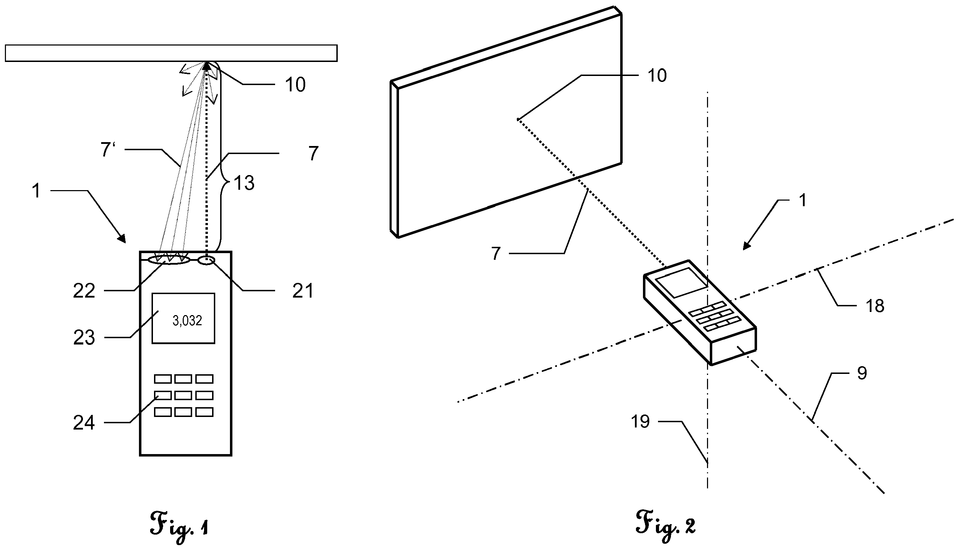

In Figur 1 ist ein gattungsgemässes handhaltbares Entfernungsmessgerät 1 zum Vermessen von Entfernungen in Aussenansicht dargestellt. Es weist ein Gehäuse auf, in dem die notwendigen elektronischen Komponenten angeordnet sind. Das Gehäuse ist dabei so ausgebildet, dass das Entfernungsmessgerät 1 in der Hand gehalten und auch an einem zu vermessenden Punkt definiert angelegt oder angeschlagen werden kann. Am Gehäuse können zu diesem Zweck entsprechende Anlagekanten oder ausklappbare oder aufsteckbare Anschlagelemente angebracht sein, wie sie beispielsweise in der WO 02/50564 beschrieben werden. Das Entfernungsmessgerät 1 beinhaltet an seiner Vorderseite einen Laserentfernungsmesser 20 mit einer Laseraussendeeinheit 21 und einer Laserempfangseinheit 22, die über optische Öffnungen im Gehäuse verfügen. Auf der Oberseite des Geräts befinden sich eine Anzeigevorrichtung 23 in Form eines Displays und Eingabemittel 24 in Form eines Tastenfeldes. Ausserdem kann eine - hier nicht dargestellte - Kamera zur Aufnahme von Bildern in Richtung der Emissionsrichtung vorgesehen sein.

Erfindungsgemäss sendet die Laseraussendeeinheit 21 einen Laserstrahl 7 zu einem Messpunkt 10 auf einer Wand aus. Die Wand weist eine natürlich rauhe Oberfläche auf, von der optische Strahlen streuend reflektiert werden. Ein Teil der gestreut reflektierten Strahlen 7' wird von der Laserempfangseinheit 22 eingesammelt, detektiert und in ein elektrisches Signal umgewandelt. Das Signal wird in an sich bekannter Weise zum Bestimmen des digitalen Werts der Distanz 13 von einer elektronischen Schaltung ausgewertet. Zur Entfernungsermittlung kann z. B. Phasen- oder Laufzeitmessung eingesetzt werden. Dabei wird auch die Erstreckung zwischen der Laserempfangseinheit 22 und einem Messanschlag berücksichtigt. Der durch die Auswertung digital bestimmte Wert der gemessenen Entfernung 13 - von hier beispielsweise 3,032 Metern - wird dann auf dem Display 23 einem Benutzer zur Verfügung gestellt.

Figur 2 zeigt das erfindungsgemässe handhaltbare Entfernungsmessgerät 1, das einen Laserstrahl 7 in der Emissionsrichtung 9 zu einem Messpunkt 10 aussendet. Dargestellt sind auch die orthogonal zur Emissionsrichtung 9 verlaufenden Drehachsen: die Querachse 18 und die Stehachse 19.

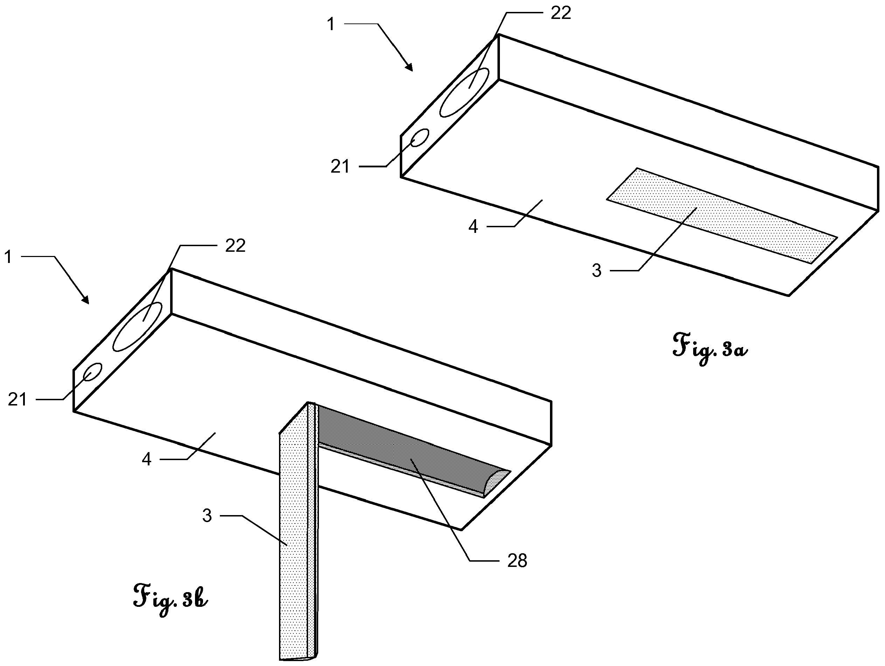

Figuren 3a und 3b zeigen eine Ausführungsform des erfindungsgemässen handhaltbaren Entfernungsmessgerätes 1 mit einer Laseraussendeeinheit 21 und einer Laserempfangseinheit 22 in einer Ansicht von schräg unten. In eine Aussparung 28 des Gehäuses 4 des Entfernungsmessgerätes 1 ist eine Referenzierungsstütze 3 in Form eines ausklappbaren Stiftes integriert. In Figur 3a ist die Referenzierungsstütze 3 eingeklappt, so dass sie bündig mit der Oberfläche des Gehäuses 4 abschliesst. In Figur 3b ist die Referenzierungsstütze 3 ausgeklappt und nimmt ungefähr einen rechten Winkel zum Gehäuse 4 ein. In dieser Position ist die Referenzierungsstütze 3 gegenüber dem Entfernungsmessgerät 1 in drei Dimensionen sowohl dreh- als auch schwenk- und kippbar. Das untere Ende der Referenzierungsstütze 3 kann auf einen Punkt eines Referenzobjektes 2 (Referenzpunkt) gestellt oder in einer dazu vorgesehenen Aufnahme, zum Beispiel der eines Standfusses 8 oder eines Stativs, fixiert werden.

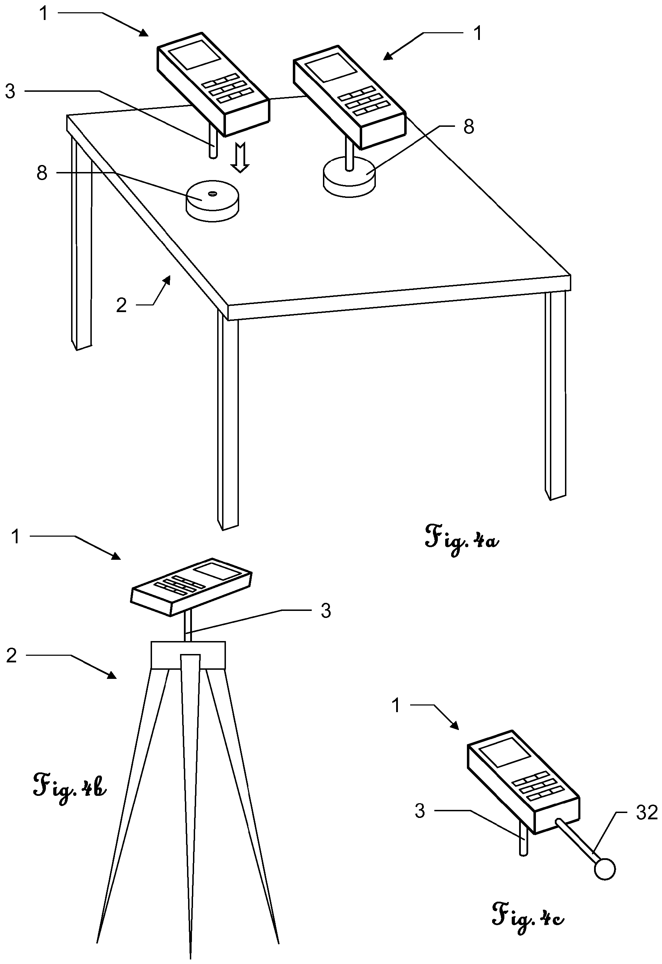

In den Figuren 4a und 4b ist dargestellt, wie das Entfernungsmessgerät 1 mittels der Referenzierungsstütze 3 mit einem - wenigstens für den Zeitraum einer oder mehrerer Messungen - relativ zu einem Referenzkoordinatensystem feststehenden Referenzobjekt 2 verbunden werden kann.

In Figur 4a wird die Referenzierungsstütze 3 des Entfernungsmessgerätes 1 mit einem Standfuss 8 verbunden, der einen festen Stand auf einer Oberfläche eines Referenzobjektes 2, beispielsweise einer Tischplatte, gewährleistet. Das Entfernungsmessgerät 1 und die Referenzierungsstütze 3 müssen dann nicht ständig in der Hand gehalten werden, und die Messgenauigkeit wird erhöht.

In Figur 4b ist das Referenzobjekt 2 ein dreibeiniges Stativ. Die Referenzierungsstütze 3 des Entfer

nungsmessgerätes 1 ist direkt mit dem Stativ verbunden. Die Verbindung der Referenzierungsstütze 3 mit dem Standfuss 8 oder dem Referenzobjekt 2 kann insbesondere durch eine Schraub- oder Steckverbindung erfolgen.

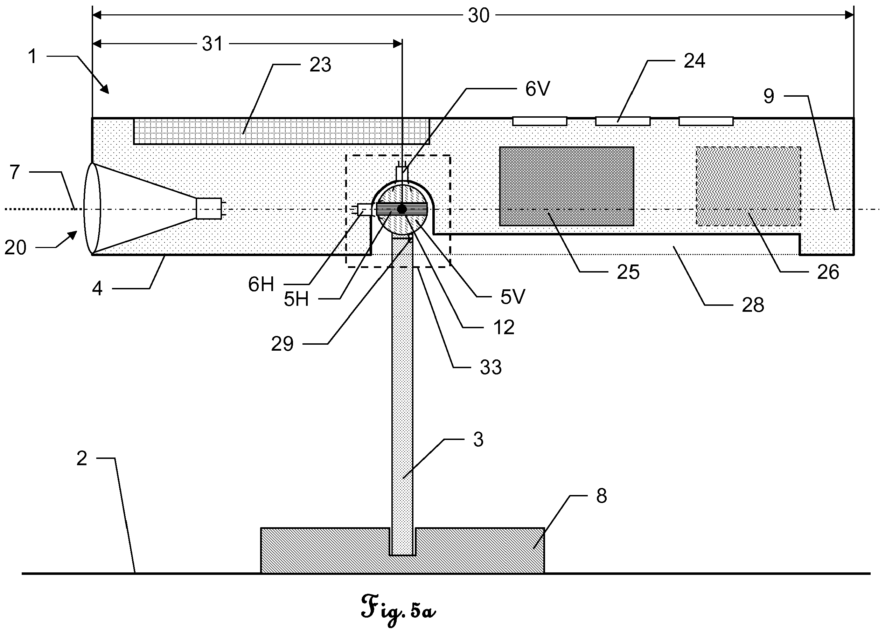

Figur 5a stellt einen Längsschnitt durch eine erste bevorzugte Ausführungsform des erfindungsgemässen handhaltbaren Entfernungsmessgerätes 1 dar. Die Referenzierungsstütze 3 ist um ein Scharnier 29 in die Referenzierungsposition ausgeklappt und mit einem Standfuss 8 verbunden, der auf einem Referenzpunkt auf der Oberfläche eines Referenzobjektes 2 steht. Das Entfernungsmessgerät 1 beinhaltet einen Laserentfernungsmesser 20 mit einem in Emissionsrichtung 9 ausgesendeten Laserstrahl 7. Des Weiteren sind ein Display 23, Eingabemittel 24 und die Aussparung 28 für die Referenzierungsstütze 3 im Gehäuse 4 dargestellt. Als interne Komponenten werden eine Winkelbestimmungseinheit 33, eine Auswertekomponente 25 und ein Inertialsensor 26 gezeigt. An der um den Drehpunkt 12 dreidimensional drehbaren Verbindung der Referenzierungsstütze 3 mit dem Entfernungsmessgerätekörper sind als Komponenten der Winkelbestimmungseinheit 33 zwei Winkelencoder 5H,5V mit dazugehörigen Sensoren 6H,6V vorgesehen, die horizontale und vertikale Winkel zwischen zwei räumlichen Ausrichtungen des Entfernungsmessgerätes 1 relativ zur Referenzierungsstütze 3 erfassen können. Die Achse der Emissionsrichtung 9 verläuft durch den Drehpunkt 12, der sich in einer bekannten Teilentfernung 31 der ebenfalls bekannten Gesamtlänge 30 des Entfernungsmessgeräts 1 von dessen Vorderseite befindet. Dies ermöglicht insbesondere einfachere Rechenoperationen. Ausserdem ist im Entfernungsmessgerät 1 eine (nicht dargestellte) Energiequelle enthalten, insbesondere eine Batterie oder ein Akku, die elektrische Energie für die elektrisch betriebenen Komponenten des Entfernungsmessgeräts 1 bereitstellt.

Ein digital vorliegender Entfernungswert kann - wie bei optisch gemessenen Distanzen heute üblich - von der Auswertekomponente 25 des Gerätes gespeichert, weiterverarbeitet oder übertragen und auf dem Display 24 einem Benutzer angezeigt werden.

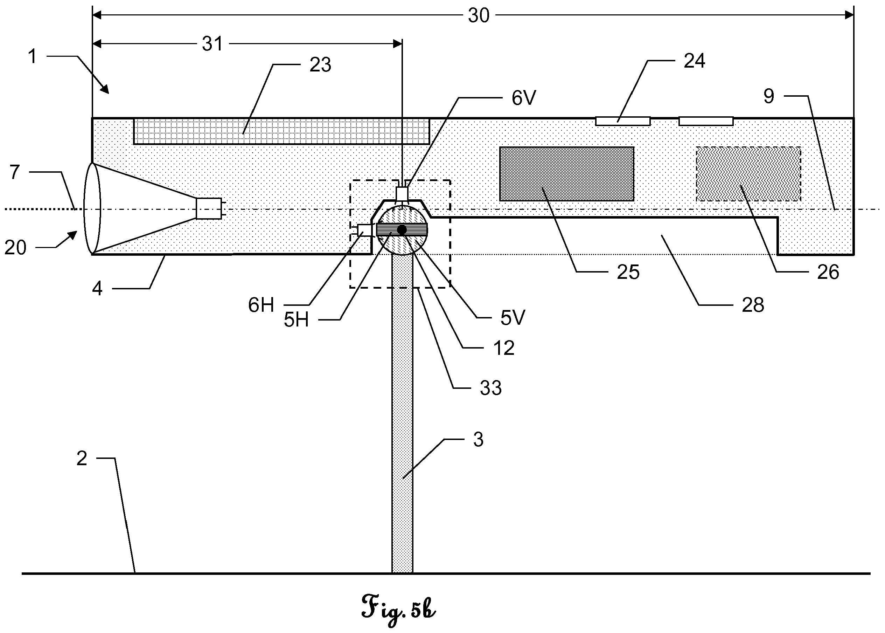

In Figur 5b ist die Referenzierungsstütze 3 um den Drehpunkt 12 in die Aussparung 28 umklappbar, sodass kein zusätzliches Scharnier benötigt wird.

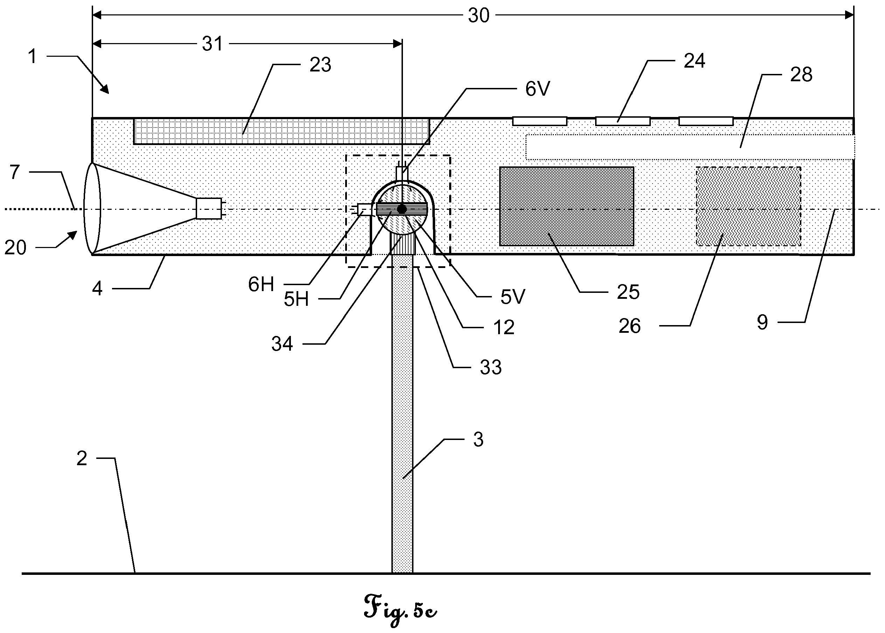

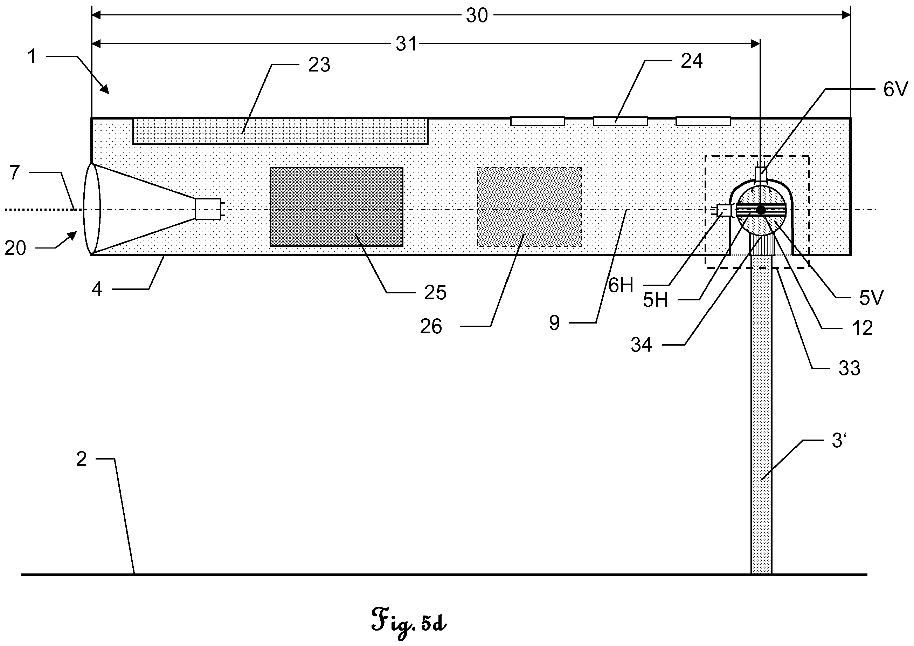

Die Figuren 5c und 5d zeigen zwei alternative Ausführungsformen eines handhaltbaren Entfernungsmessgerätes 1. In Figur 5c ist die Referenzierungsstütze 3 abnehmbar gestaltet und wird über das Verbindungselement 34 mit der Winkelbestimmungseinheit 33 verbunden, insbesondere durch eine Schraub- oder Steckverbindung. An seinem hinteren Ende weist das Gehäuse 4 eine Öffnung auf, durch welche die Referenzierungsstütze 3 nach Gebrauch in die Aussparung 28 gesteckt werden kann. In Figur 5d ist eine weitere alternative Ausführungsform dargestellt. Die Winkelbestimmungseinheit 33 ist hier am hinteren Bereich des Gerätes angebracht. In das Verbindungselement 34 ist eine Re

ferenzierungsstütze 3 einsteck- oder einschraubbar, die im abgenommenen Zustand vom Rest des Entfernungsmessgerätes 1 separat aufbewahrt wird oder an einer an einer Aussenseite des Gehäuses 4 optional bereitgestellten Halterung (nicht dargestellt) befestigbar ist.

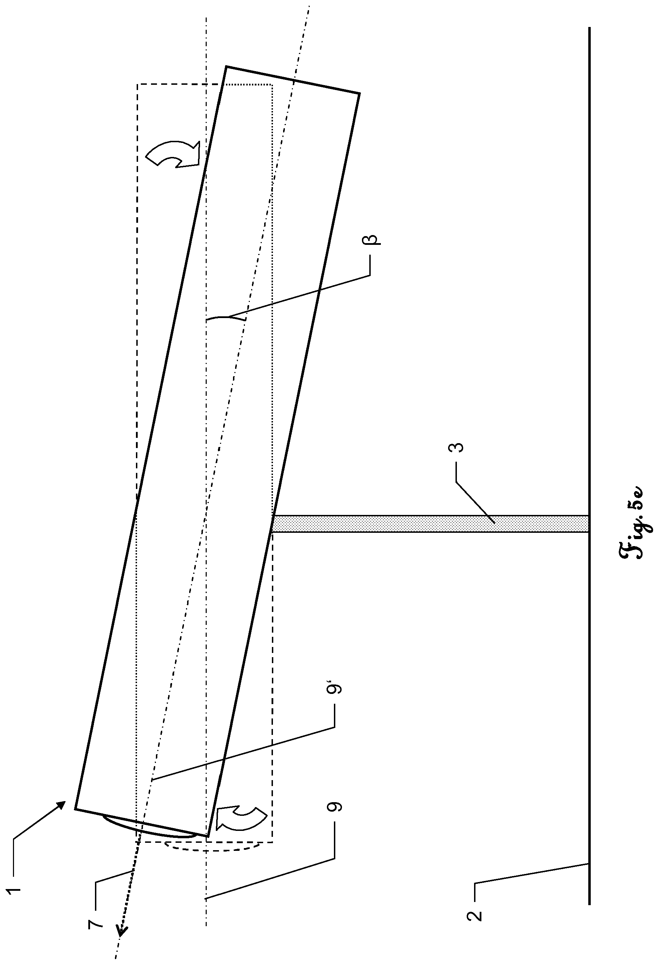

Figur 5e zeigt in einer Seitenansicht ein erfindungsgemässes Entfernungsmessgerät 1. Mit gestrichelten Linien ist eine erste Ausrichtung des Gehäuses mit einer ersten Emissionsrichtung 9 dargestellt, mit durchgezogenen Linien eine zweite Ausrichtung mit einer zweiten Emissionsrichtung 9'. Die Ausrichtung der Referenzierungsstütze 3 bleibt bei einer Ausrichtungsänderung des Gehäuses unverändert, sodass ein Winkel - hier dargestellt der vertikale Kippwinkel $\beta$ - zwischen den beiden Ausrichtungen von einer Winkelbestimmungseinheit des Entfernungsmessgerätes 1 erfasst werden kann.

Um Messfehler durch unbeabsichtigte Ausrichtungsänderungen der Referenzierungsstütze während eines Messvorganges oder zwischen zwei oder mehr Messvorgängen ausschliessen zu können, ist vorzugsweise in oder an der Referenzierungsstütze 3 ein - hier nicht dargestellter - Neigungssensor vorgesehen, der derart ausgestaltet ist, dass er, insbesondere dynamisch fortlaufend, eine aktuelle Ausrichtung der Referenzierungsstütze 3 erfassen kann. Dadurch kann dynamisch die relative Lage des Entfernungsmessgerätes 1 zum Referenzpunkt bestimmt werden. Während der Messungen oder zwischen den Messungen eventuell aufgetretene Ausrichtungsänderungen, beispielsweise durch Wackeln oder Zittern der Hand des Benutzers, werden so erfasst und können in die Berechnung der Winkel und Distanzen einfliessen.

Wird immer eine feste Verbindung zwischen Referenzierungsstütze 3 und Referenzobjekt 2 hergestellt, wie zum Beispiel bei der Verwendung der in den Figuren 4a und 4b dargestellten Hilfsmittel Standfuss 8 oder Stativ, kann auf einen Neigungssensor in der Referenzierungsstütze 3 verzichtet werden, da sich die relative Ausrichtung der Referenzierungsstütze 3 nicht verändern kann.

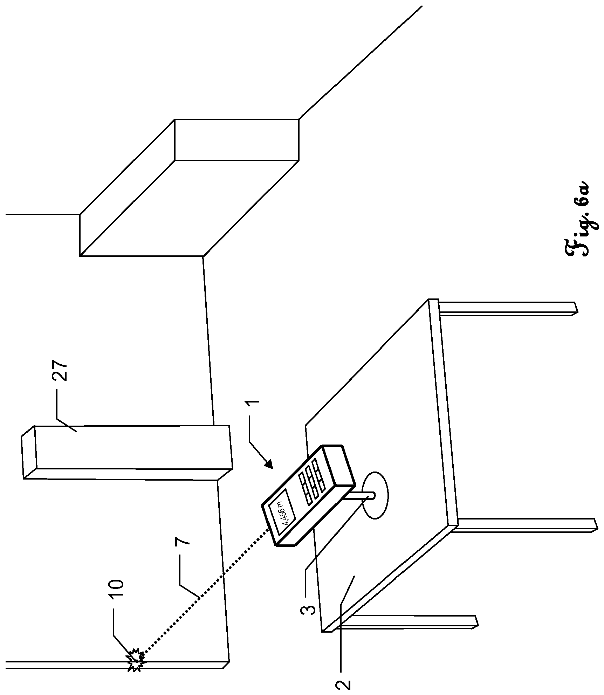

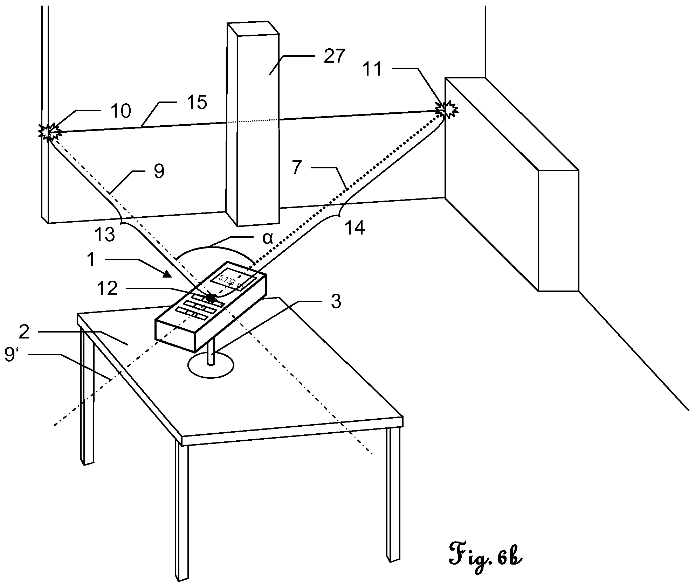

In Figuren 6a und 6b wird ein Verfahren illustriert, wie mit dem erfindungsgemässen Entfernungsmessgerät 1 eine Entfernung 12 zwischen zwei entfernten Messpunkten ermittelt werden kann, zum Beispiel wenn ein Hindernis 27 eine direkte Messung von Punkt 10 zu Punkt 11 verhindert.

In Figur 6a ist eine beispielhafte Ausführungsform des erfindungsgemässen handhaltbaren Entfernungsmessgerätes 1 beim Messen der Entfernung zu dem ersten Messpunkt 10 dargestellt. Das Entfernungsmessgerät 1 wird dazu über die Referenzierungsstütze 3 an einem Referenzpunkt mit einem - wenigstens für den Zeitraum der Messsequenz - relativ zu einem Referenzkoordinatensystem feststehenden Referenzobjekt 2 (hier dargestellt als Tisch) verbunden und sendet einen Laserstrahl 7 in Richtung des ersten Messpunktes 10 aus.

In Figur 6b ist das erfindungsgemässe handhaltbare Entfernungsmessgerät 1 beim Messen zu dem zweiten Messpunkt 11 dargestellt. Dabei bleibt die Position der Referenzierungsstütze 3 am Referenzpunkt auf dem Referenzobjekt 2 gegenüber der ersten Messung unverändert, es wird nur das Gehäuse 4 um den Drehpunkt 12 herum neu ausgerichtet. Über einen Winkelmesser wird dann ein - horizontaler und/oder vertikaler - Winkel $\alpha$ zwischen der ersten Emissionsrichtung 9 und der zweiten Emissionsrichtung 9' ermittelt. Aus den ermittelten Winkeln und den gemessenen Entfernungen 13,14 zwischen dem Drehpunkt 12 und den Messpunkten 10,11 errechnet die Auswerteeinheit 25 die Distanz 15 zwischen den Messpunkten 10,11.

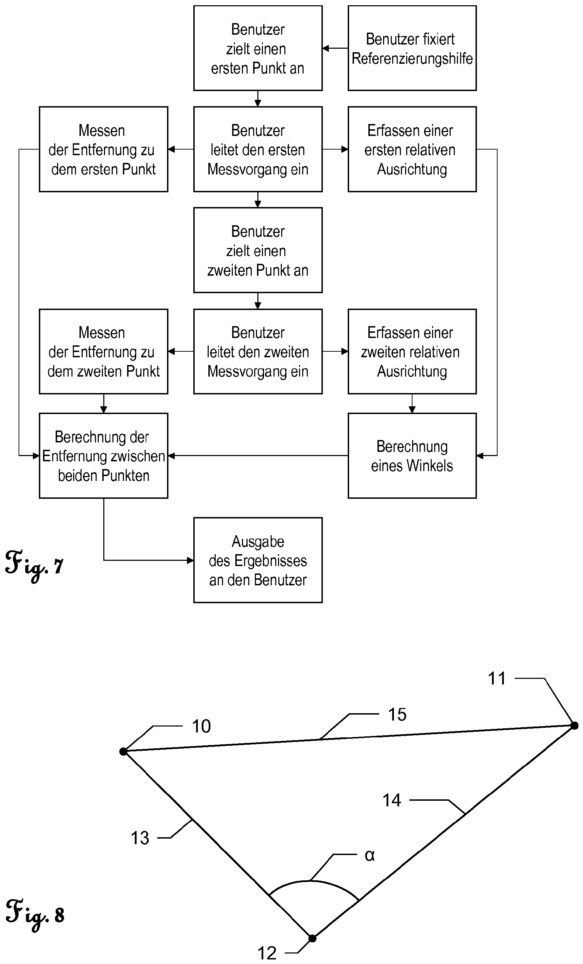

Figur 7 stellt ein Flussdiagramm dar, das die einzelnen Schritte des in den Figuren 6a und 6b gezeigten Messverfahrens illustriert, die nach Verfahrensstart ablaufen. Zum Starten des Verfahrens wählt der Benutzer über die Eingabemittel 24 das entsprechende Verfahren aus und fixiert die Referenzierungsstütze 3 auf einem Referenzobjekt 2 am Referenzpunkt. Dann zielt der Benutzer mit dem Laserstrahl 7 des Entfernungsmessgerätes 1 auf den ersten Messpunkt 10 und leitet über die Eingabemittel 24 den Messvorgang ein. Die Auswerteeinheit ermittelt und speichert die von Laserentfernungsmesser 20, Winkelsensoren 6H,6V und Neigungssensoren ermittelten Werte für die Entfernung und die Ausrichtung. Der Benutzer schwenkt das Gehäuse 4 des Entfernungsmessgerätes 1 (ohne die Fixierung der Referenzierungsstütze 3 auf dem Referenzpunkt zu lösen) und zielt den zweiten Messpunkt 11 an. Mit dem Auslösen des Messvorganges werden von der Auswerteeinheit 25 eine weitere Entfernung und Ausrichtung ermittelt und gespeichert. Aus den Werten für die Ausrichtung des Gehäuses 4 errechnet die Auswerteeinheit 25 zunächst einen Winkel $\alpha$. Dieser Winkel und die gemessenen Entfernungen werden zur Berechnung der Entfernung zwischen den beiden Messpunkten genutzt. Das Ergebnis wird dem Benutzer auf einem Display angezeigt.

Figur 8 zeigt die trigonometrischen Grundlagen des erfindungsgemässen Verfahrens. Die Länge einer Strecke 15 kann mittels der bekannten Entfernungen 13,14 von einem beliebigen Raumpunkt 12 zu den Endpunkten 10,11 der Strecke 15 und dem Winkel $\alpha$ zwischen den Richtungen vom Raumpunkt 12 zu den Endpunkten 10,11 berechnet werden. Dazu kann insbesondere der Kosinussatz verwendet werden.

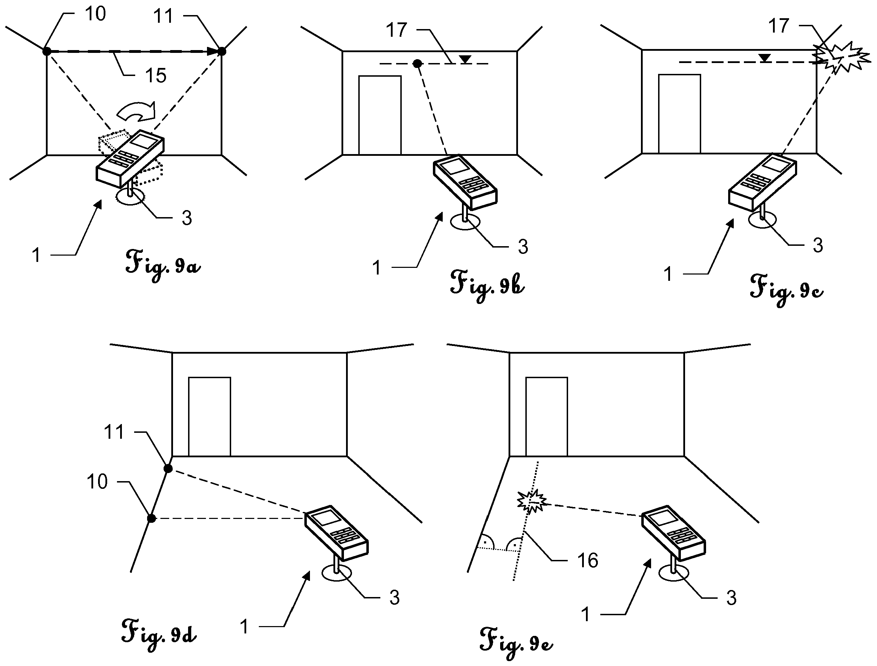

In den Figuren 9a bis 9e werden beispielhaft Messverfahren dargestellt, die mit dem erfindungsgemässen handhaltbaren Entfernungsmessgerät 1 durchgeführt werden können.

Figur 9a illustriert ein Verfahren zur Bestimmung eines Spannmasses, d. h. einer Entfernung zwischen zwei Punkten, von einem entfernten Standpunkt aus. Dafür wird zunächst ein erster Messpunkt 10 angezielt und vermessen. Danach wird das Entfernungsmessgerät 1 geschwenkt, um einen zweiten Messpunkt 11 anzuzielen, dessen Abstand 15 vom ersten Messpunkt 10 ermittelt werden soll. Dabei ist insbesondere ein Modus kontinuierlichen Messens ("Tracking-Modus") möglich, bei dem für jeden angezielten Punkt der Abstand 15 zum ersten Messpunkt 11 auf dem Display angezeigt wird.

Figuren 9b und 9c illustrieren ein Verfahren zur einfachen Bestimmung einer vertikalen Entfernung eines Messpunktes zu einer Horizontalebene 17, welche durch einen ersten Messpunkt 10 definiert wird. Dazu wird nach dem Starten der Applikation eine Referenzhöhe (z. B. ein Punkt an einer Wand) gemessen. Anschliessend wird die Referenzhöhe an eine beliebige Stelle übertragen. Dazu wird das Entfernungsmessgerät 1 beispielsweise auf einen Punkt auf einer anderen Wand ausgerichtet und die Messung ausgelöst. Auf dem Display wird dann eine relative Höhe des Laserpunktes zur durch die Referenzhöhe definierten Horizontalebene 17 angezeigt. Durch elevative Orientierungsvariation des Entfernungsmessgeräts 1 und erneutes Messen kann beispielsweise ein zweiter Messpunkt auf derselben Höhe, oder einer gewünschten anderen Höhe markiert werden. Dabei ist auch ein Modus kontinuierlichen Messens ("Tracking-Modus") möglich, in dem ein Erreichen der Referenzhöhe oder einer vom Benutzer eingestellten anderen Höhe automatisch angezeigt wird oder kontinuierlich die Entfernung eines aktuellen Messpunktes von dieser Höhe angezeigt wird.

Die Figuren 9d und 9e illustrieren ein weiteres mit dem erfindungsgemässen handhaltbaren Entfernungsmessgerät ausführbares Verfahren. Mittels des dargestellten Verfahrens ist die Bestimmung eines orthogonalen Abstandes eines Messpunktes zu einer Geraden, die durch zwei erste Messpunkte 10,11 definiert wird, möglich. Dazu zielt der Benutzer zunächst einen Messpunkt 10 an und misst dessen Entfernung und die aktuelle Ausrichtung des Entfernungsmessgerätes 1. Anschliessend wiederholt der Benutzer dies mit einem zweiten Messpunkt 11. Dadurch wird eine Gerade durch die beiden Messpunkte 10,11 definiert. Alle Messungen werden als Projektion auf die Horizontale behandelt. Nun zielt der Benutzer einen dritten Messpunkt an; auf dem Display wird der Abstand des Punktes zur Geraden angezeigt. Der Benutzer kann nun den Laserpunkt bewegen, bis ein gewünschter Abstand gefunden ist. Insbesondere kann mit dieser Funktion eine Parallele 16 zur Geraden bestimmt werden.

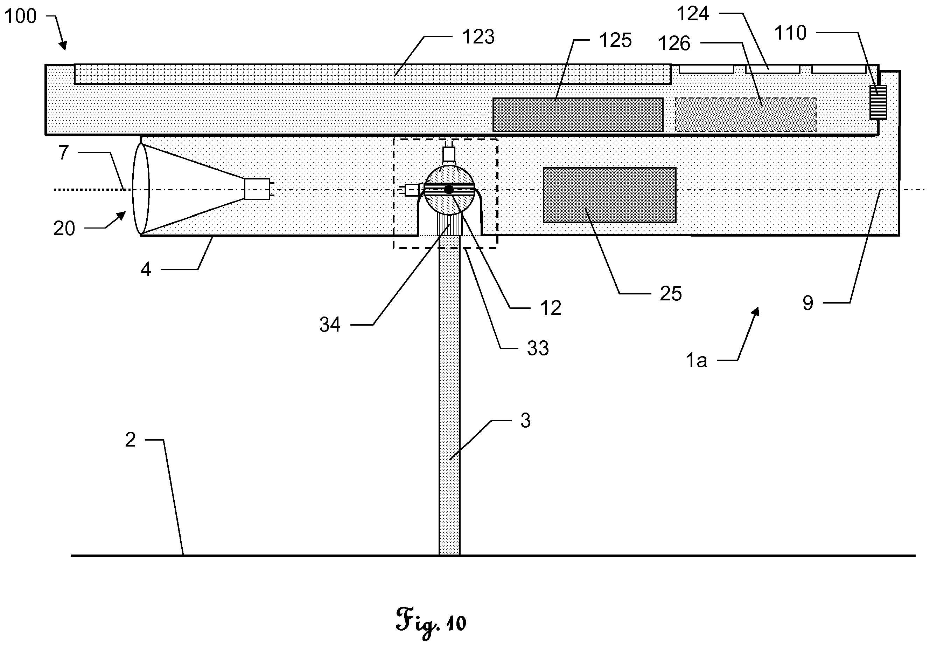

In Figur 10 ist eine weitere Ausführungsform des erfindungsgemässen handhaltbaren Entfernungsmessgerätes dargestellt. In dieser ist das Gerät als Aufsetzmodul 1a ausgestaltet, das zur mechanischen Verbindung mit einem handhaltbaren Kleincomputer, beispielsweise einem sogenannten Smartphone oder Tablett-Computer, ausgestaltet ist. Dargestellt ist hier ein Smartphone 100, das auf das handhaltbare Aufsetzmodul 1a aufgesetzt ist, wobei über eine standardisierte Datenschnittstelle 110, beispielsweise ausgestaltet als USB-Schnittstelle, ein Datenaustausch zwischen Aufsetzmodul 1a und Smartphone 100 ermöglicht wird. Das Aufsetzmodul 1a hat weder ein Display noch Eingabemittel; deren Aufgaben werden stattdessen durch Display 123 und Eingabemittel 124 des Smartphones 100 bereitgestellt. Auch auf einen Neigungssensor kann beim Aufsetzmodul 1a verzichtet werden, da das dargestellte Smartphone 100 über einen Neigungssensor 126 verfügt. Das Aufsetzmodul 1a beinhaltet einen Laserentfernungsmesser 20 mit einem in Emissionsrichtung 9 ausgesendeten Laserstrahl 7 und am Drehpunkt 12 eine Winkelbestimmungseinheit 33. Die Achse der Emissionsrichtung 9 verläuft vorzugsweise durch den Drehpunkt 12.

Es versteht sich, dass diese dargestellten Figuren nur mögliche Ausführungsbeispiele schematisch darstellen. Die verschiedenen Ansätze können ebenso miteinander wie mit Verfahren und Geräten des Stands der Technik kombiniert werden.

**Patentansprüche**

1. Handhaltbares Entfernungsmessgerät (1) mit

    • einem Gehäuse (4),
    • einer Entfernungsmesseinheit, insbesondere einem Laserentfernungsmesser (20), zur Messung von Entfernungen (13, 14) zu Raumpunkten (10, 11) entlang einer Emissionsrichtung (9) in einem Raum,
    • einer Auswertekomponente (25),
    • einer formstabilen Referenzierungsstütze (3) und
    • einer Winkelbestimmungseinheit (33) zur Bestimmung eines Drehwinkels ($\alpha$, $\beta$) zwischen dem Gehäuse (4) und der Referenzierungsstütze (3),

    **dadurch gekennzeichnet, dass**

    • die Referenzierungsstütze (3) mit einem ersten Ende über ein Gelenk mit dem Gehäuse (4) mindestens um eine zur Emissionsrichtung (9) orthogonale Querachse (18) und eine Stehachse (19) um einen Drehpunkt (12) drehbar verbunden ist, wobei das Gehäuse (4) eine Aussparung (28) aufweist, und die Referenzierungsstütze (3) und die Aussparung (28) derart beschaffen und aufeinander abgestimmt sind, dass die Referenzierungsstütze (3) durch eine Ausklappbewegung aus einer Passivposition, in der sie in die Aussparung (28) eingefügt ist, in eine Referenzierungsposition gebracht werden kann, in der sie mit einem zweiten Ende auf einem Referenzpunkt eines Referenzobjektes (2) fixierbar ist, und
    • bei einem Fixieren der Referenzierungsstütze (3) auf dem Referenzpunkt eine Lage des Gehäuses (4) zum Raum, insbesondere relativ zu dem Referenzpunkt, vollautomatisch bestimmbar ist.

2. Entfernungsmessgerät (1) nach Anspruch 1, **dadurch gekennzeichnet, dass** die Winkelbestimmungseinheit (33) mindestens einen Winkelencoder (5H) beinhaltet, der dazu ausgelegt ist, mindestens einen horizontalen Drehwinkel ($\alpha$) um die Stehachse (19) zwischen dem Gehäuse (4) und der Referenzierungsstütze (3) zu erfassen.

3. Entfernungsmessgerät (1) nach Anspruch 2, **dadurch gekennzeichnet, dass** die Winkelbestimmungseinheit (33) mindestens zwei Winkelencoder (5H, 5V) beinhaltet, die dazu ausgelegt sind, mindestens einen horizontalen Drehwinkel ($\alpha$) um die Stehachse (19) und einen vertikalen Kippwinkel ($\beta$) um die Querachse (18) zwischen dem Gehäuse (4) und der Referenzierungsstütze (3) zu erfassen.

4. Entfernungsmessgerät (1) nach einem der vorangegangenen Ansprüche, **gekennzeichnet durch** mindestens einen Neigungssensor (26), der dazu ausgelegt ist, eine Ausrichtung des Entfernungsmessgerätes (1) im Raum zu ermitteln, insbesondere

  • eine Ausrichtung der Referenzierungsstütze (3) im Raum zu ermitteln, und/oder
  • mindestens einen vertikalen Kippwinkel ($\beta$) des Gehäuses (1) zu erfassen, insbesondere um einen Drehpunkt (12).

5. Entfernungsmessgerät (1) nach einem der vorangegangenen Ansprüche, **dadurch gekennzeichnet, dass** die Auswertekomponente (25) ausgelegt ist

  • zur Ableitung und Bereitstellung der gemessenen Entfernungen (13, 14),
  • zur Ableitung und Bereitstellung von gemessenen Winkeln ($\alpha$, $\beta$),
  • zur Berechnung und Bereitstellung einer Distanz (15), insbesondere einer Schrägdistanz und/oder eines Höhenunterschiedes, zwischen zwei vermessenen Raumpunkten (10, 11), und/oder
  • zur Berechnung und Bereitstellung von Positionen in einem dreidimensionalen lokalen Koordinatensystem.

6. Entfernungsmessgerät (1) nach einem der vorangegangenen Ansprüche, **dadurch gekennzeichnet, dass**

die Referenzierungsstütze (3) durch eine Ausklappbewegung um ein am ersten Ende der Referenzierungsstütze (3) befindliches Scharniergelenk (29) aus der Passivposition in die Referenzierungsposition und wieder zurück in die Passivposition gebracht werden kann.

7. Entfernungsmessgerät (1) nach einem der vorangegangenen Ansprüche, **dadurch gekennzeichnet, dass** die Referenzierungsstütze (3) um den Drehpunkt (12) in die Aussparung (28) umklappbar ist.

8. Entfernungsmessgerät (1) nach einem der vorangegangenen Ansprüche, **dadurch gekennzeichnet, dass** es als ein Aufsetzmodul (1a) ausgebildet ist zur Verbindung mit einem handhaltbaren Kleincomputer, insbesondere Smartphone (100) oder Tablett-Computer, wobei Messdaten drahtlos oder über eine Datenschnittstelle (110) transferierbar sind.

9. Entfernungsmessgerät (1) nach einem der vorangegangenen Ansprüche, **gekennzeichnet durch**

  • eine Kamera zur Aufnahme von Bildern in Richtung der Emissionsrichtung (9),
  • ein Display (23) zur Anzeige mittels der Kamera aufgenommener Bilder und/oder gemessener und berechneter Entfernungen (13, 14, 15) und Winkel ($\alpha$, $\beta$), und/oder
  • Eingabemittel (24), insbesondere ein Tastenfeld, zum Anwählen von Funktionen.

10. Verfahren für ein handhaltbares Entfernungsmessgerät (1) nach einem der Ansprüche 1 bis 9 zum Ermitteln geometrischer Daten in einem Raum, wobei die geometrischen Daten Koordinaten von Raumpunkten (10, 11), eine Distanz (15) zwischen zwei Raumpunkten (10, 11), und/oder Winkel ($\alpha$, $\beta$) umfassen, mit einer Messsequenz mit

  • einem Messen einer Entfernung (13) in einer ersten Emissionsrichtung (9) zu einem ersten Raumpunkt (10) und einem Erfassen einer ersten Ausrichtung des Gehäuses (4) relativ zum Raum in der ersten Emissionsrichtung (9), sowie
  • einem Messen einer Entfernung (14) in einer zweiten Emissionsrichtung (9') zu einem zweiten Raumpunkt (11) und einem Erfassen einer zweiten Ausrichtung des Gehäuses (4) relativ zum Raum in der zweiten Emissionsrichtung (9'),

  **dadurch gekennzeichnet, dass**

• die Referenzierungsstütze (3) durch eine Ausklappbewegung aus der Passivposition in die Referenzierungsposition gebracht wird,

• für den Zeitraum der Messsequenz das zweite Ende der Referenzierungsstütze (3) auf einem Referenzpunkt eines Referenzobjektes (2) fixiert wird,

• das Erfassen der ersten und zweiten Ausrichtung des Gehäuses (4) mittels der Winkelbe-stimmungseinheit (33) und der Referenzie-rungsstütze (3) erfolgt, insbesondere relativ zum Referenzpunkt, und

• zum Ermitteln der geometrischen Daten die gemessenen Entfernungen (13, 14) basierend

■ auf der ersten und zweiten erfassten Ausrichtung des Gehäuses (4) und
■ auf der Kenntnis über die Fixierung des zweiten Endes der Referenzierungsstütze (3) auf dem Referenzpunkt

zueinander in Beziehung gesetzt werden.

11. Verfahren nach Anspruch 10,
   **dadurch gekennzeichnet, dass**

   • während des Messens der Entfernung (13, 14) zu einem Raumpunkt (10, 11) dynamisch fort-laufend eine Ausrichtung der Referenzierungs-stütze (3) im Raum ermittelt wird, und
   • ein Berechnen von Entfernungen (13, 14, 15) auch anhand von ermittelten Änderungen der Ausrichtung der Referenzierungsstütze (3) im Raum erfolgt.

12. Verfahren nach Anspruch 10 oder Anspruch 11,
   **dadurch gekennzeichnet, dass**
   während des Messens der Entfernung (13, 14) zu einem Raumpunkt (10, 11) dynamisch fortlaufend eine Ausrichtung des Gehäuses (4) im Raum ermittelt wird.

13. Verfahren nach einem der Ansprüche 10 bis 12, ,
   **gekennzeichnet durch**
   eine Berechnung der Distanz (15) zwischen zwei Raumpunkten (10, 11) mittels Triangulation erfolgt, insbesondere mittels des Kosinussatzes und mittels der gemessenen Entfernungen (13, 14) zu den Raumpunkten (10, 11) und mindestens einem Win-kel ($\alpha$, $\beta$) zwischen einer ersten Emissionsrichtung (9) und einer zweiten Emissionsrichtung (9').

14. Verfahren nach einem der Ansprüche 10 bis 13,
   **gekennzeichnet durch**

   • Messen der Entfernungen (13, 14) zu mindestens zwei Raumpunkten (10, 11), wobei

   ■ die vertikale Ausrichtung und die horizontale Ausrichtung des Gehäuses (4) bei jeder Entfernungsmessung erfasst wird, und
   ■ während des Messens die relative Lage des Referenzobjektes (2) zu den Raumpunkten (10, 11) unverändert ist, und

   • Berechnen der Koordinaten von mindestens zwei gemessenen Raumpunkten (10, 11).

15. Verfahren nach einem der Ansprüche 10 bis 13,
   **dadurch gekennzeichnet, dass**

   • anhand der Koordinaten eines Raumpunktes (10) eine horizontale Ebene (17) definiert wird, und optional eine Entfernung eines zweiten Raumpunktes (11) zu dieser Ebene (17) ermittelt wird, und/oder
   • anhand der Koordinaten mindestens zweier Raumpunkte (10, 11)

   ■ eine Distanz (15) zwischen zwei Raumpunkten (10, 11) ermittelt wird, und/oder
   ■ ein Verlauf einer Geraden durch zwei Raumpunkte (10, 11) ermittelt wird, und optional eine Entfernung eines dritten Raumpunktes oder einer Parallelen (16), die durch einen dritten Raumpunkt definiert wird, zu dieser Geraden ermittelt wird.

**Claims**

1. A hand-held distance measuring device (1) comprising

   • a housing (4),
   • a distance measuring unit, more particularly a laser rangefinder (20), for measuring distances (13, 14) to spatial points (10, 11) along an emission direction (9) in a space,
   • an evaluation component (25),
   • a dimensionally stable referencing support (3) and
   • an angle determining unit (33) for determining a rotational angle ($\alpha$, $\beta$) between the housing (4) and the referencing support (3),

   **characterized in that**

   • a first end of the referencing support (3) is connected via a hinge joint to the housing (4) in a manner rotatable about a rotational point (12), at least about a transverse axis (18) orthogonal to the emission direction (9) and a vertical axis (19), wherein the housing (4) has a cutout (28), and the referencing support (3) and the cutout (28) are conditioned and adapted to one another in such a way that the referencing support (3) can be brought by a folding-out movement from a passive position, in which it is inserted into the cutout (28), into a referencing position, in which, with a second end, it is fixable to a reference point of a reference object (2), and
• a location of the housing (4) in relation to the space, more particularly relative to the reference point, is determinable in a fully automatic manner when fixing the referencing support (3) on the reference point.

2. The distance measuring device (1) as claimed in claim 1,
   **characterized in that**
   the angle determining unit (33) contains at least one rotary encoder (5H), which is configured to register at least one horizontal rotational angle ($\alpha$) about the vertical axis (19) between the housing (4) and the referencing support (3).

3. The distance measuring device (1) as claimed in claim 2,
   **characterized in that**
   the angle determining unit (33) contains at least two rotary encoders (5H, 5V), which are configured to register at least one horizontal rotational angle ($\alpha$) about the vertical axis (19) and a vertical tilt angle ($\beta$) about the transverse axis (18) between the housing (4) and the referencing support (3).

4. The distance measuring device (1) as claimed in any one of the preceding claims,
   **characterized by**
   at least one inclination sensor (26), which is configured to establish an alignment of the distance measuring device (1) in the space, more particularly

   • to establish an alignment of the referencing support (3) in the space and/or
   • to register at least one vertical tilt angle ($\beta$) of the housing (1), more particularly about a rotational point (12).

5. The distance measuring device (1) as claimed in any one of the preceding claims,
   **characterized in that**
   the evaluation component (25) is configured

   • to derive and provide the measured distances (13, 14),
   • to derive and provide measured angles ($\alpha$, $\beta$),
   • to calculate and provide a distance (15), more particularly an oblique distance and/or a height difference, between two measured spatial points (10, 11), and/or
   • to calculate and provide positions in a three-dimensional local coordinate system.

6. The distance measuring device (1) as claimed in any one of the preceding claims,
   **characterized in that**
   the referencing support (3) can be brought from the passive position into the referencing position and back into the passive position by a folding-out movement about a hinge joint (29) which is situated at the first end of the referencing support (3).

7. The distance measuring device (1) as claimed in any one of the preceding claims,
   **characterized in that**
   the referencing support (3) is foldable about the rotational point (12) into the cutout (28).

8. The distance measuring device (1) as claimed in any one of the preceding claims,
   **characterized in that**
   it is embodied as an attachment module (1a) for connection with a hand-held small computer, more particularly a smartphone (100) or tablet computer, wherein measurement data are transferable wirelessly or via a data interface (110).

9. The distance measuring device (1) as claimed in any one of the preceding claims,
   **characterized by**

   • a camera for recording images in the direction of the emission direction (9),
   • a display (23) for displaying images recorded by means of the camera and/or measured and calculated distances (13, 14, 15) and angles ($\alpha$, $\beta$), and/or
   • input means (24), more particularly a keypad, for selecting functions.

10. A method for a hand-held distance measuring device (1) as claimed in any one of claims 1 to 9, for establishing geometric data in a space, wherein the geometric data comprise coordinates of spatial points (10, 11), a distance (15) between two spatial points (10, 11), and/or angles ($\alpha$, $\beta$), comprising a measurement sequence which comprises

    • measuring a distance (13) in a first emission direction (9) to a first spatial point (10) and registering a first alignment of the housing (4) relative to the space in the first emission direction (9), and
    • measuring a distance (14) in a second emission direction (9') to a second spatial point (11) and registering a second alignment of the housing (4) relative to the space in the second emission direction (9'),

**characterized in that**

• the referencing support (3) is brought from the passive position into the referencing position by a folding-out movement,
• the second end of the referencing support (3) is fixed on a reference point of a reference object (2) for the period of the measurement sequence,
• the first and the second alignment of the housing (4) is registered by means of the angle determining unit (33) and the referencing support (3), more particularly relative to the reference point, and
• for the purposes of establishing the geometric data, the measured distances (13, 14) are put into relation with one another on the basis

■ of the first and the second registered alignment of the housing (4) and
■ of the knowledge about the fixation of the second end of the referencing support (3) on the reference point.

11. The method as claimed in claim 10, **characterized in that**

• an alignment of the referencing support (3) in the space is dynamically continuously established during the measurement of the distance (13, 14) to a spatial point (10, 11) and
• distances (13, 14, 15) are also calculated on the basis of established changes in the alignment of the referencing support (3) in the space.

12. The method as claimed in claim 10 or claim 11, **characterized in that**
an alignment of the housing (4) in the space is dynamically continuously established during the measurement of the distance (13, 14) to a spatial point (10, 11).

13. The method as claimed in any one of claims 10 to 12, **characterized by**
the distance (15) between two spatial points (10, 11) being calculated by means of triangulation, more particularly by means of the law of cosines and by means of the measured distances (13, 14) to the spatial points (10, 11) and at least one angle ($\alpha$, $\beta$) between a first emission direction (9) and a second emission direction (9').

14. The method as claimed in any one of claims 10 to 13, **characterized by**

• measuring the distances (13, 14) to at least two spatial points (10, 11), wherein

■ the vertical alignment and the horizontal alignment of the housing (4) is registered during each distance measurement and
■ the relative location of the reference object (2) in relation to the spatial points (10, 11) remains unchanged during the measurement, and

• calculating the coordinates of at least two measured spatial points (10, 11).

15. The method as claimed in any one of claims 10 to 13, **characterized in that**

• a horizontal plane (17) is defined on the basis of the coordinates of a spatial point (10) and, optionally, a distance of a second spatial point (11) to this plane (17) is established, and/or,
• on the basis of the coordinates of at least two spatial points (10, 11),

■ a distance (15) is established between two spatial points (10, 11) and/or
■ a path of a straight line through two spatial points (10, 11) is established and, optionally, a distance of a third spatial point or a parallel line (16), which is defined by a third spatial point, from this straight line is established.

**Revendications**

1. Appareil de mesure de la distance pouvant être tenu à la main (1) avec

• un boîtier (4),
• une unité de mesure de la distance, en particulier un télémètre laser (20), pour la mesure de distances (13, 14) à des points de l'espace (10, 11) le long d'une direction d'émission (9) dans un espace,
• une composante d'évaluation (25),
• un support de référencement de forme stable (3) et
• une unité de détermination d'angle (33) pour la détermination d'un angle de rotation ($\alpha$, $\beta$) entre le boîtier (4) et le support de référencement (3),

**caractérisé en ce que**

• le support de référencement (3) est relié de manière rotative avec une première extrémité par une articulation au boîtier (4) au moins autour d'un axe transversal (18) orthogonal par rapport à la direction d'émission (9) et d'un axe vertical (19) autour d'un pivot (12), le boîtier (4) présentant un évidement (28) et le support de référencement (3) et l'évidement (28) étant d'une nature telle et adaptés l'un à l'autre de telle manière que le support de référencement (3) peut être amené par un mouvement de déploiement d'une position passive, dans laquelle il est inséré dans l'évidement (28), à une position de référencement dans laquelle il peut être fixé avec une seconde extrémité sur un point de référence d'un objet de référence (2) et

• que, lors d'une fixation du support de référencement (3) sur le point de référence, une position du boîtier (4) par rapport à l'espace, en particulier par rapport au point de référence, peut être déterminée de manière entièrement automatique.

2. Appareil de mesure de la distance (1) selon la revendication 1, **caractérisé en ce que** l'unité de détermination d'angle (33) contient au moins un codeur angulaire (5H) qui est agencé pour détecter au moins un angle de rotation horizontal ($\alpha$) autour de l'axe vertical (19) entre le boîtier (4) et le support de référencement (3).

3. Appareil de mesure de la distance (1) selon la revendication 2, **caractérisé en ce que** l'unité de détermination d'angle (33) contient au moins deux codeurs angulaires (5H, 5V) qui sont agencés pour détecter au moins un angle de rotation horizontal ($\alpha$) autour de l'axe vertical (19) et un angle de basculement vertical ($\beta$) autour de l'axe transversal (18) entre le boîtier (4) et le support de référencement (3).

4. Appareil de mesure de la distance (1) selon l'une des revendications précédentes, **caractérisé par** au moins un capteur d'inclinaison (26) qui est agencé pour détecter une orientation de l'appareil de mesure de la distance (1) dans l'espace, en particulier

• une orientation du support de référencement (3) dans l'espace et/ou
• au moins un angle de basculement vertical ($\beta$) du boîtier (1), en particulier autour d'un pivot (12).

5. Appareil de mesure de la distance (1) selon l'une des revendications précédentes, **caractérisé en ce que** la composante d'évaluation (25) est agencée

• pour la dérivation et la mise à disposition des distances mesurées (13, 14),
• pour la dérivation et la mise à disposition d'angles mesurés ($\alpha$, $\beta$),
• pour le calcul et la mise à disposition d'une distance (15), en particulier d'une distance oblique et/ou d'une différence de hauteur, entre deux points de l'espace mesurés (10, 11) et/ou
• pour le calcul et la mise à disposition de positions dans un système de coordonnées locales tridimensionnelles.

6. Appareil de mesure de la distance (1) selon l'une des revendications précédentes, **caractérisé en ce que** le support de référencement (3) peut être amené par un mouvement de déploiement autour d'une articulation à charnière (29) qui se trouve à la première extrémité du support de référencement (3) de la position passive à la position de référencement et peut être ramené à la position passive.

7. Appareil de mesure de la distance (1) selon l'une des revendications précédentes, **caractérisé en ce que** le support de référencement (3) peut être rabattu autour du pivot (12) dans l'évidement (28).

8. Appareil de mesure de la distance (1) selon l'une des revendications précédentes, **caractérisé en ce qu'**il est configuré comme un module à poser dessus (1a) pour la connexion à un petit ordinateur portatif, en particulier à un smartphone (100) ou à une tablette, les données de mesure pouvant être transférées sans fil ou par une interface de données (110).

9. Appareil de mesure de la distance (1) selon l'une des revendications précédentes, **caractérisé par**

• une caméra pour la prise d'images dans le sens de la direction d'émission (9),
• un affichage (23) pour afficher les images prises au moyen de la caméra et/ou des distances mesurées et calculées (13, 14, 15) et des angles ($\alpha$, $\beta$) mesurés et calculés et/ou
• un moyen d'entrée (24), en particulier un clavier, pour sélectionner des fonctions.

10. Procédé pour un appareil de mesure de la distance pouvant être tenu à la main (1) selon l'une des revendications 1 à 9 pour déterminer des données géométriques dans un espace, cependant que les données géométriques comprennent des coordonnées de points d'espace (10, 11), une distance (15) entre deux points d'espace (10, 11) et/ou des angles ($\alpha$, $\beta$), avec une séquence de mesure avec

• une mesure d'une distance (13) dans une première direction d'émission (9) à un premier point d'espace (10) et une détection d'une première orientation du boîtier (4) par rapport à l'espace dans la première direction d'émission (9) ainsi
• qu'une mesure d'une distance (14) dans une seconde direction d'émission (9') à un second point d'espace (11) et une détection d'une seconde orientation du boîtier (4) par rapport à l'espace dans la seconde direction d'émission (9'), **caractérisé en ce que**
• le support de référencement (3) est amené par un mouvement de déploiement de la position passive à la position de référencement,

• la seconde extrémité du support de référencement (3) est fixée, pour la période de la séquence de mesure, sur un point de référence d'un objet de référence (2),

• la détection de la première et de la seconde orientation du boîtier (4) est effectuée au moyen de l'unité de détermination d'angle (33) et du support de référencement (3), en particulier par rapport au point de référence et

• pour la détermination des données géométriques les distances mesurées (13,14) sont mises en relation l'une par rapport à l'autre, sur la base

  ■ de la première et de la seconde orientation du boîtier (4) détectée et

  ■ de la connaissance sur la fixation de la seconde extrémité du support de référencement (3) sur le point de référence.

11. Procédé selon la revendication 10, **caractérisé en ce**

  • **qu'**une orientation du support de référencement (3) dans l'espace est déterminée pendant la mesure de la distance (13, 14) à un point d'espace (10, 11) de manière dynamique continue et
  • un calcul des distances (13, 14, 15) est également fait à l'aide de modifications détectées de l'orientation du support de référencement (3) dans l'espace.

12. Procédé selon la revendication 10 ou la revendication 11, **caractérisé en ce qu'**une orientation du boîtier (4) dans l'espace est déterminée de manière dynamique continue pendant la mesure de la distance (!3, 14) à un point d'espace (10, 11).

13. Procédé selon l'une des revendications 10 à 12, **caractérisé par** un calcul de la distance (15) entre deux points d'espace (10, 11) par triangulation, en particulier au moyen de la loi des cosinus et au moyen des distances mesurées (13, 14) aux points d'espace (10, 11) et d'au moins un angle ($\alpha$, $\beta$) entre une première direction d'émission (9) et une seconde direction d'émission (9').

14. Procédé selon l'une des revendications 10 à 13, **caractérisé par**

  • la mesure des distances (13, 14) à au moins deux points d'espace (10, 11), cependant que

    ■ l'orientation verticale et l'orientation horizontale du boîtier (4) est détectée à chaque mesure de la distance et
    ■ que pendant la mesure la position relative de l'objet de référence (2) par rapport aux points d'espace (10, 11) est inchangée et

• le calcul des coordonnées d'au moins deux points d'espace mesurés (10, 11).

15. Procédé selon l'une des revendications 10 à 13, **caractérisé en ce**

  • **qu'**un plan horizontal (17) est défini à l'aide des coordonnées d'un point d'espace (10) et en option une distance d'un second point d'espace (11) à ce plan (17) est déterminée et/ou
  • à l'aide des coordonnées d'au moins deux points d'espace (10, 11)

    ■ une distance (15) entre deux points d'espace (10, 11) est déterminée et/ou
    ■ un tracé d'une droite par deux points d'espace (10, 11) est déterminé et en option une distance à cette droite d'un troisième point d'espace ou d'une parallèle (16) qui est définie par un troisième point d'espace.

Fig. 1

Fig. 2

Fig. 3a

Fig. 3b

Fig. 4a

Fig. 4b

Fig. 4c

Fig. 5a

EP 2 885 608 B1

Fig. 5b

Fig. 5e

Fig. 5d

Fig. 5e

EP 2 885 608 B1

*Fig. 6a*

EP 2 885 608 B1

Fig. 6b

Fig. 7

Fig. 8

Fig. 9a

Fig. 9b

Fig. 9c

Fig. 9d

Fig. 9e

Fig. 10

EP 2 885 608 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0738899 A
- EP 0701702 A
- US 20110288818 A1
- DE 102007043496 A1
- JP 2008116249 A
- DE 10214742 A1
- WO 0250564 A